# EUROPEAN PATENT APPLICATION

(11) **EP 1 978 656 A1**
(43) Date of publication of application: **08.10.2008**
(21) Application number: 07105438.1
(22) Date of filing: 02.04.2007
(51) Int. Cl.: H04B 10/24, H04B 10/155

(54) **Fiber optic link for transmission of digital data**

(71) Applicant: FOCE Technology International B.V., 6105 BN Maria-Hoop (NL)
(72) Inventor: Schemmann, Marcel Franz Christian, NL-6105 BN, Maria-Hoop (NL); Mink, Jan, NL-5663 JR, Geldrop (NL)
(74) Representative: DeltaPatents B.V.

(57) **Abstract**

The transmitter (20) and the receiver (50) of a fiber optical link (1) for transmitting digital data (DS) from a first device (14) to a second device (12) are designed to operate in a first, high-power/ high-speed, mode and in a second, low-power/ low-speed mode for transmitting and receiving high-speed data signals (DSₕ) and low-speed data signals (DSₗ), respectively. Transmission of low-speed data is format independent, data interpretation is not required so that processing can be minimized, and power consumption can be reduced substantially

## Description

### BACKGROUND OF THE INVENTION

The invention relates to a fiber optical link for transmitting digital data from a first device to a second device, which link comprises an optical transmitter coupled to the first device and an optical receiver coupled to the second device and at least one optical fiber arranged between the transmitter and the receiver.

The invention also relates to an optical transmitter and to an optical receiver for use in the fiber optic link.

Such a fiber optical link is known, for example from the patent application US2004/0184746. This document relates to an apparatus for interfacing a digital full color video signal source with a display such as a flat panel display, for example a liquid crystal display (LCD). To drive displays of the flat panel type, data rates in the order of hundreds of megabits per second are required. Reducing such rates by data compression is undesirable or unacceptable as it prevents real time display, which is required by currently used transmission formats such as the digital visual interface (DVI) format.

A fiber optical link for consumer, i.e. mass, electronic apparatuses should have a simple and cheap construction and its power consumption should be low. The fiber link of the patent application US2004/0184746 comprises a fiber cable having six fibers for transmission of the red-, green-, and blue information signal, a pixel clock signal, a relative low speed transmission protocol signal (DDC clock) and a digital transmission protocol signal (DDC data), respectively from the optical transmitter to the optical receiver. For these fibers a corresponding number of lasers and associated drivers are provided, which each consume power. The patent application US 2004/0184746 is not concerned about power consumption.

In the field of professional telecommunication, high-speed communication systems are known wherein power consumption is reduced in order to reduce dissipation in electronic cards a number of which are carried by a shelf in a telecommunication rack and to avoid overheating of the system. However, the reduced power consumption in such high-speed communication system is still too large for a consumer electronics apparatus link. Moreover, such a link should have the capability to operate not only in a full operation mode, but also in a standby mode wherein the link remains active; i.e. the transmitter is still optically connected with the receiver.

### SUMMARY TO THE INVENTION

It is an object of the present invention to provide a fiber optical link as defined in the opening paragraph, which link shows an optimum balance between power consumption and data transmission rate capacity. This fiber optical link is characterized in that the transmitter and the receiver are designed to operate in a first, high-power/ high- speed, mode and in a second low-power/ low-speed, mode for transmitting and receiving high-speed data signals and low-speed data signals respectively.

The high-speed mode is understood to mean the mode wherein (high data rate) information signals, for example a digital color television signal, are transmitted at a data bit rate larger than 100 megabit per second, hereinafter Mbs. In this mode, the radiation source, usually a diode laser operates at full power and the emitted radiation beam is modulated at high frequency by means of a laser driver. This driver, who comprises an amplifier, consumes relative much power. The low-speed mode is understood to mean the mode wherein (low-data-rate) signals are transmitted at a data bit rate smaller than 10 Mbs. In this mode, which includes a standby mode, the high-power driver is off, i.e. inactive, and the laser itself consumes little power. The invention is based, amongst others, on the insight that a diode laser included in the transmitter of a fiber optical link can be used to transmit signals at a reduced rate also when it is operated with an electrical current that is considerably smaller than the usual drive current or when it is modulated with a current that is not well controlled around a bias point and may reach values below the laser threshold value. Modulation of a laser beam resulting from a small laser current, which beam has a low intensity, requires little electrical power. Also the laser itself, if emitting a low-intensity beam consumes little power.

Under circumstances the diode laser may be supplied with such small current that it acts as a light emitting diode, which produces a radiation beam having an intensity that is substantially smaller than that of a laser beam. The low-intensity beam can be modulated, for example by switching the low current on and off and thus is suitable to transmit low-speed signals and/or to maintain an optical connection between the transmitter and the receiver.

In this way a fiber optical link is obtained that is capable of operating in two modes: a high-speed data transmission mode and a low-speed data transmission and/or standby mode whereby the power consumption is kept at minimum, i.e. is not larger than required for the required functionality. Conventional fiber optical links have only one operating mode and power consumption can be optimized for that mode only.

Since power consumption is a very important issue for consumer apparatuses, implementing the invention in the link between two such apparatuses provides great advantages. In addition to signals having a DVI or HDMI (high-density multimedia interface) format, also signals having another, existing or future, format can be transmitted by means of the present fiber optical link. The invention is not only suitable for consumer apparatuses, but it can also be used in other environments such as in protected monumental buildings wherein walls and ceilings should be kept in their original state, in hospitals wherein wireless communication is not allowed, and in factories for communication between machines and between parts of one machine. Generally, the invention can be used in all circumstances wherein large amounts of information should be transmitted and the information is encoded by means of encoding protocols.

It is remarked that English abstract of Japanese patent application JP2002335213 gives a minor description of an optical communication transceiver, wherein a bias operating signal supplied to a driver circuit for a diode laser is modulated. However, the purpose of the additional modulation is to generate a so-called tone signal, which is sent to a receiver, which sends a tone or confirmation back to the transmitter in order to establish coupling between the transmitter and the receiver and the quality of this coupling. Thereafter the transmission of data starts and during this transmission the tone signal may be absent. The document JP2002335213 does not disclose the use of a first and a second transmission mode for transmitting a high-speed signal and a low-speed signal, respectively.

The invention also relates to an optical transmitter, which comprises a diode laser, a laser bias circuit, a laser driver, a power input and a data signal input. This transmitter is characterized by a power-mode-input for receiving a power-mode signal, which controls the power supplied to the laser driver.

The laser bias circuit is understood to mean a well-known circuit that controls whether the laser is in the "on" condition, i.e. the laser is enabled, or in the "off" condition, i.e. the laser is disabled. The laser driver is understood to mean the circuit that controls; i.e. modulates the laser output. The driver usually includes an amplifier that consumes relatively much power. The power mode input allows the transmitter to receive a control signal by means of which the power supplied to the laser driver can be switched between a relative high value, for high-speed signal transmission, and a relative low value, for low-speed signal transmission. The relative low value may be a zero value; i.e. the laser driver power is switched off.

Alternatively, the optical transmitter may be characterized by a circuit that recognizes the data rate of the date signal and sets the transmitter in said first mode or in said second mode in dependency of the data rate.

The optical transmitter, having a power-mode-input and wherein the bias circuit comprises an enabling input, may be further characterized in that the enabling input is designed to accept a low-speed signal for switching the bias circuit according to the low-speed signal.

The enabling input is understood to mean a bias circuit input port for receiving a control signal that is determined by the data rate of the data signal and sets the bias circuit.

Alternatively, the optical transmitter, having a power-mode-input and wherein the bias circuit comprises an enabling input, may be characterized in that the bias circuit comprises a separate input for receiving a low-speed signal for switching the bias circuit according to the low-speed signal.

Another possible embodiment of the optical transmitter is characterized in that the laser driver is designed to accept a low-speed signal when the transmitter is in a low-power mode and the bias circuit is inactive.

In this embodiment, both the high-speed signal and the low-speed signal are supplied to the laser driver. For high-speed signal transmission, the laser driver is supplied with high power and the bias circuit is active. For low-speed signal transmission the bias circuit is not active and low power is supplied to the driver so that the driver can switch the laser on and off in dependency of the low-speed signal.

The invention also relates to an optical receiver for use in the new optical link, which receiver comprises a photo diode for converting an optical signal into an electrical signal, an amplifier circuit for amplifying the electrical signal, a power supply for the amplifier and a monitoring circuit for monitoring the photo diode current. This receiver is characterized by a decision circuit for controlling the power supply in dependency of the data rate of the received optical signal and for delivering low-speed electrical signals, an input of the decision circuit being connected to an output of the monitoring circuit.

The received optical signal is understood to mean the laser radiation that has propagated the optical fiber and is modulated according to the data signal to be transmitted. The decision circuit receives a signal from the monitoring circuit that is adapted for the purpose of the invention. In case the receiver receives a low-speed, i.e. low-date rate, optical signal, the decision circuit delivers at a first output a signal to switch the power supply off or to a low level and delivers at a second output a low-speed electrical signal that represents the received low-speed optical signal. In this way, a substantial reduction of power consumption can be realized also in the receiver.

The monitoring circuit of a conventional optical receiver is provided with an output for delivering a monitor signal that is representative of the received optical power. The receiver of the present invention may be characterized in that this output is designed to handle signals having a bandwidth of the order of 10 MHz and is coupled to the input of the decision circuit.

Due to upgrading the conventionally low bandwidth of the said output to a few MHz, the low-speed electrical signal can now be obtained via the monitoring circuit and the decision circuit.

Alternatively the receiver according to the invention may be characterized in that the monitoring circuit is provided with an additional output designed to handle signals of the order of 10 MHz and that this output is connected to the input of the decision circuit.

The invention can be used in combination with several types of multiplexing systems for distinguishable transmitting the different types of signal such that they can be separated and separately processed in the receiver. The said combination results in several embodiments of the fiber optical link. A first embodiment is characterized in that the fiber optical link is configured for time domain multiplexing (TDM) the high-speed signal and the low-speed signal.

In this embodiment the high-speed, i.e. high-data-rate, signal and the low-speed signal are transported in different time intervals along one and the same signal line, e.g. the core of an optical fiber.

A second embodiment is characterized in that the fiber optical link is configured for wavelength division multiplexing (WDM) the high-speed signal and the low-speed signal.

In this embodiment again one and the same signal line is used, but radiation of different wavelengths are used to transport the high-speed signal and the low-speed signal along the single line.

Preferably, this embodiment is further characterized in that the fiber optical link is also configured for time division multiplexing the high-speed signal and the low-speed signal.

In this way, possible complications are avoided and a very practical optical link is obtained.

A third embodiment is characterized in that the fiber optical link is configured for spatial division multiplexing the high-speed signal and the low-speed signal.

The new term spatial division multiplexing (SDM) is understood to mean that the high-speed signal and the low-speed signal are transported via different signal lines, for example the high-speed signal travels along the core of a fiber and the low-speed signal travels via the cladding of the fiber. It is also possible to use separate fibers for the two signals. These fibers may have different core diameters

Preferably, this embodiment is further characterized in that the optical fiber link is also configured for time division multiplexing the high-speed signal and the low-speed signal.

This provides similar advantages as mentioned herein above for the combination of WDM and TDM.

A fourth embodiment is characterized in that the fiber optical link is configured for code division multiplexing at least one of signals of the type low-speed signal and tone signal.

Code division multiplexing is understood to mean that the low-speed signal is labeled with a signature, for example by means of a dedicated modulation of the laser, so that it will be recognized in the receiver. Besides a low-speed signal also another low-rate signal may be labeled, for example the tone signal mentioned in the document JP2002335213 discussed herein-above. This document does not mention labeling of the tone signal, which further confirms that the concept of this document is of another type than the concept of the present invention.

Preferably, the last mentioned embodiment is further characterized in that the fiber optical is also configured for time division multiplexing the high-speed signal and the low-speed signal.

This provides similar advantages as mentioned herein above for the combination of WDM and TDM and the combination of SDM and TDM.

An important aspect of the present invention relates to the handling of the data content of the signals. Since different control modes are used for the high-speed signal and the low-speed signal, respectively, the data content of these signals can be processed in a new and inventive way. The transmission of these signals can be made independent of different, i.e. manufacturer-specific, standards (transmission protocols), which are used by several manufacturers of consumer apparatuses.

A first embodiment of the fiber optical link wherein this possibility is used is characterized in that it is configured to over-sample at least one low-speed data signal without analyzing this signal.

It is possible to transmit more than one low-speed signal, at least one of which is a data signal, and these low-speed signals may be over-sampled. Signals propagating in opposite directions, i.e. bi-directional signals may also be over-sampled.

A second embodiment of such a fiber optical link is characterized in that it is configured to over-sample the high-speed signal without decoding this signal.

The invention can be used in several types of fiber optical link assemblies. A first type of such an assembly is characterized in that it is constituted by a single channel.

A second type of such an assembly is characterized in that it comprises a low-speed bi-directional channel and a high-speed channel of the type one-directional or bi-directional.

This assembly may be further characterized in that bi-directional channel lines are suitable for pull-up (I²C), pull-down or tri-state methods.

### BRIEF DESCRIPTION OF THE DRAWING

These and other aspects of the invention will be apparent from and elucidated by way of non-limitative example with reference to the embodiments described hereinafter. In the drawings:
Fig. 1 shows a diagram of a conventional high-speed fiber optical link;
Fig. 2a shows a portion of a DC balanced signal;
Fig. 2b shows a portion of a non-DC-balanced signal:
Fig. 3 shows a principle diagram of the transmitter according to the invention;
Fig. 4 shows the diagram of a first embodiment of this transmitter;
Fig. 5 shows a diagram of a second embodiment of this transmitter;
Fig. 6 shows a diagram of a conventional optical receiver;
Fig. 7 shows a diagram of an optical receiver according to the invention;
Fig. 8 shows an embodiment of a portion of this receiver;
Fig. 9 shows details of an embodiment of this receiver;
Fig. 10 shows an optical link according to the invention wherein wavelength division multiplexing is used;
Figs. 11a-11c shows embodiments of fiber configurations for an optical link according to the invention wherein spatial division multiplexing is used.
Fig. 12 shows a diagram of signal processing at the transmitter side of an embodiment of the fiber optical link;
Fig. 13 shows a diagram of signal processing at the receiver side of an embodiment of the fiber optical link;
Figs. 14 and 15 show schemes of transfer of side state transition in an optical link that is provided with state determining devices at the end of the optical line

### DETAILLED DESCRIPTION OF PREFERRED EMBODIMENTS

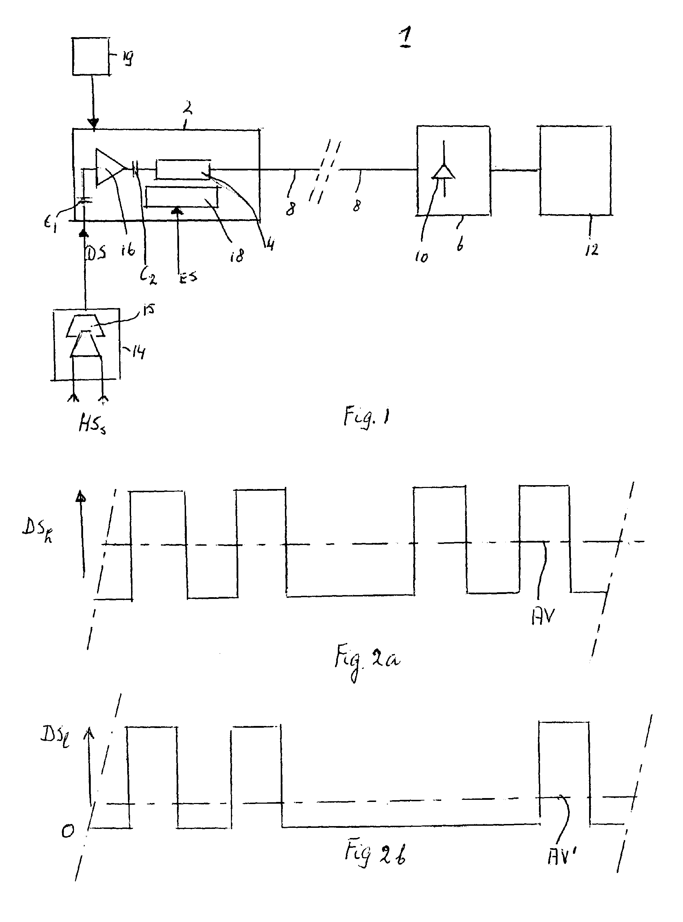

Fig. 1 shows a diagram of a conventional high-speed optical link 1, or connection, which is intended for data transmission in, for example the gigabit (Gbs) range. The link includes an optical transmitter 2, which comprises a diode laser 4. An optical fiber 8 is optically coupled to the radiation emitting face of the diode laser such that the input end of the fiber captures maximum laser radiation. Such a coupling technique is well known in the art of optical communication and does not need to be described in details here. For example, U.S. patent application US 2005/0180700 describes an optical connector for electronic devices, which connector comprises an optical transmitter, an optical receiver, a transmit fiber and a receive fiber. These fibers are positioned relatively close to the corresponding transmitter and detector such that no coupling lens is needed.

In the optical link of Fig. 1 the output end of the fiber 8 is optically connected to a receiver 6, which comprises a photo diode 10 with its associated electronic processing means (not shown). The output of the receiver 6 is connected to an input of a display device 12, for example a flat display such as a LCD. The transmitter receives electrical data signals DS from a data source 14, which is an apparatus that includes a device for generating, receiving and processing digital signals. The source 14 may comprise a so-called serializing component 15 and a, for example 8x, high- speed signal may be supplied to the source. The data source 14 may be a computer, a video signal generator, for example a DVD player, or any other digital data signal generator. The transmitter 2 includes a high-speed driver amplifier 16 for controlling the laser such that the radiation emitted by the laser is modulated in accordance with the data signal DS.

Generally, the conventionally used modulation formats are DC balanced, i.e. the averaged signal power above a DC line is equal to that below this line, as shown in Fig. 2a. This Figure shows a portion of a high-speed DC balanced digital data signal DSh, having an averaged, or DC, signal value AV. For comparison, a non-DC balanced data signal DS1 is shown in Fig.2b. The signal value of such a signal is always larger than or equal to zero so that its average value AV' is larger than zero. Usually the drivers of the conventional optical link, especially in the receiver but also in the transmitter are AC coupled. Fig.1 shows that driver 16 is connected to data source 14 via capacitor C₁ and to diode laser 4 via capacitor C₂.

Transmitter 2 further includes a bias circuit 18, which controls the setting of the laser diode. The bias circuit is controlled by an enabling signal ES, which is present for safety reason, for instance. Signal Es determines whether the diode laser is powered to emit laser radiation or is not powered and does not emit laser radiation. The transmitter 2 is powered from a voltage source 19.

In order to maintain functionality, i.e. keep the link in function so that at any moment a data stream can be send, the high-speed modulator, or driver, 16 of the conventional fiber optical link should be powered continuously and its laser 4 should always be in the on condition, i.e. the bias circuit 18 should enable the laser continuously via the enable signal ES. Since the high-speed modulator 16 in particular consumes much power, the conventional fiber optical link is not suitable for consumer applications, because low power consumption especially in the standby mode is a main requirement for such applications.

The fiber optical link of the present invention meets this requirement, because it can operate in at least two modes, which include a high-speed operation mode and a low-speed operation mode. With respect to the power consumption, the new fiber optical link is optimized for both the high-speed mode and the low-speed mode, instead of for the high-speed mode only. In the low-speed mode, substantially less power is consumed than in the high-speed mode. Moreover, the laser is in the on state only when this is required. In this way, the power consumption is never larger than necessary for the function required at a given moment and the lifetime of the laser is enlarged.

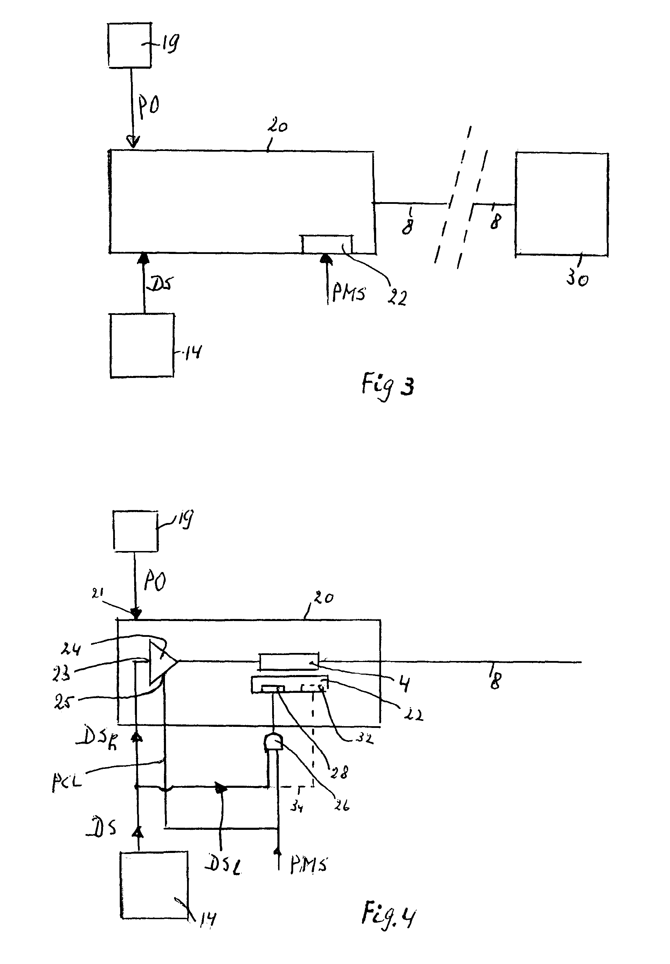

In order to minimize the power consumption of the new fiber optical link, the transmitter may be provided with a dedicated power mode input as shown in Fig. 3. This Figure shows a principle diagram of the mixed high-speed / low-speed transmitter 20 according to the invention, which transmitter comprises a power mode input 22, which is supplied with a power mode signal PMS. This signal may be derived from the presence of high-speed, i.e. high data rate, signal components in the signal supplied to the transmitter, or from an external standby signal. Signal PMS determines whether the transmitter is in the high-power mode, i.e. the high speed modulator is on and the fiber optical link is capable to transport high-speed signals, or the transmitter is in the low-power mode, i.e. the high-speed modulator is off or in a minor power-consuming condition and the fiber optical link is ready to transport low-speed signals to a receiver 30. The modulation format used for the low-speed signals is not DC balanced, but such a signal consists of short bursts of pulses in the rate up to approximately 10⁷ pulses per second. Such a burst may be similar to the signal shown in Fig. 2b. For transmission of a low-speed signal the laser is on (enabled). When no signal has to be transmitted, the laser is off (disabled).

During the low-speed mode, no accurate control of the laser bias is needed, but the normal bias condition, in the form of prescribed I_{bias} pulses, stored in a memory can be used.

Instead of having a power mode input, the transmitter may also be designed such that it recognizes the type of data signal (high-speed or low-speed) supplied and is capable to switch between a high-speed/ high-power mode suitable for DC-balanced signals and a low-speed/ low power mode suitable for non-DC-balanced signals.

Fig. 4 shows a diagram of an embodiment of the new, mixed high/low speed, transmitter 20. This transmitter has in common with the conventional transmitter (Fig. 1) a diode laser 4, a laser bias circuit 22 and a laser driver, or high-speed modulator 24. The transmitter is powered from a source 19 and receives data signals DS from a signal source 14. The laser driver 24 of the new transmitter is provided with a power switch, or an enable input 25, which receives a power mode signal PMS via a power control line PCL. Moreover, the enable input port 28 of bias circuit 22 is designed such that it accepts low-speed data signals DS1. Alternatively, the bias circuit 22 may be provided with a separate input port 32 for receiving the low-speed signal, as indicated by the dashed line 34 in Fig. 4. The power mode signal PMS is supplied also to the enabling input 28 of the bias circuit 22, via an OR-gate 26. The enabling signal ES is high; i.e. the bias circuit powers the laser when the signal source 14 supplies a high-speed signal or when the high power mode is present.

For transmitting high-speed signals, the power for the laser driver 24 is switched on by means of the power mode signal PMS and the enable signal ES is high so that the bias circuit powers the laser 4. A high-speed data signal DSh is supplied to the laser driver 24, which modulates the laser so that optical fiber 8 receives laser radiation, which is modulated according the content of the signal DSh. When transmitting a low-speed signal DS1 the power for laser driver 24 is switched off and the signal is supplied to the bias circuit 22, via either an adapted enabling input port 28 or a separate low-speed input port 32. The bias circuit is now switched on and off such that the radiation emitted by the laser 4 is encoded with the content of the low-speed signal. The signal PMS now performs the enabling function.

Since the high-power driver is on only when high-speed data signals are to be transmitted and since in the low-speed mode the bias circuit is not continuously on, but only during short time intervals, the mixed high-speed/ low-speed transmitter consumes considerably less power than a conventional high-speed transmitter.

The data paths for the high-speed signal and the low-speed signals may also be separated paths, whereby the high-speed path can be switched on and off.

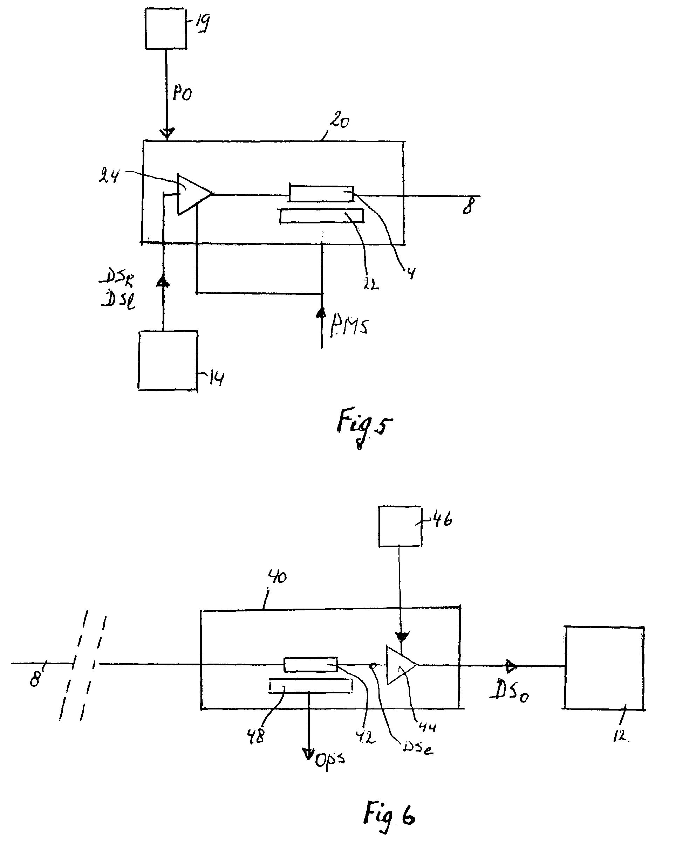

Fig. 5 shows the diagram of another possible embodiment of the new transmitter. In this embodiment the bias circuit 22 is used only for powering the diode laser 4 and receives only an enabling signal ES constituted by the power mode signal PMS. The low-speed data signal DS1 is supplied to the laser driver 24. For transmitting a high-speed signal the high-power mode is used, which results in powering of the laser via the bias circuit 22 and fully powering the driver 24 so that the driver is capable to modulate the laser according to the high-speed data signal DSh. For transmitting a low-speed signal the low-power mode is used so that the bias circuit is not powered and the laser driver receives a low power, which is sufficient to switch the laser on and off according to the low-speed data signal DS1.

Fig. 6 shows a diagram of conventional optical receiver 40. This receiver comprises a radiation-sensitive detector 42, for example a photo diode, for converting the radiation from the fiber 8 into an electrical signal DSe. This signal is processed in an amplifier stage 44 to retrieve the data, which have been presented at the input of the receiver. The output signal DSo of the stage 44 is supplied to a display device. Usually, the optical receiver includes a monitor circuit 48 for determining the average optical power received from the fiber 8 or a tone signal if this is used. To avoid that cross talk of transmitted data patterns occurs on the optical power signal OPS of the monitor circuit the latter circuit should have a low bandwidth.

The high-speed amplifier stage 44 can be AC coupled, thus via a capacitor, to the photo detector, because the high-speed signal is DC balanced. AC coupling eases the design of the amplifier stage. However, since the amplifier stage should be low-noise, it consumes much power so that it is not suitable in an optical link for consumer applications wherein the link should have a standby mode and thus be available continuously.

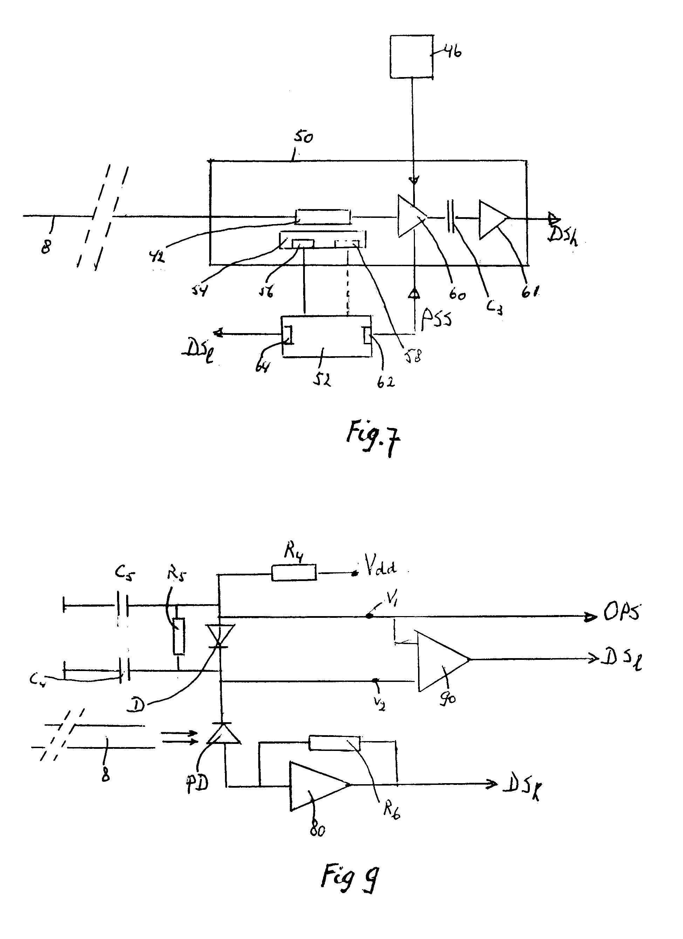

According to the invention, like the transmitter 20, the receiver has an amplifier stage that can be switched off or set in a low-power mode when low-speed signals are received. A diagram of the new, mixed high-speed/ low speed, receiver 50 is shown in Fig. 7. The new receiver differs from that of Fig. 6 in that it discriminates between low-speed and high-speed data signals, has exclusive outputs for these types of signals and switches the amplifier stage 44 automatically off when a low-speed signal is received. To that end, the receiver comprises a decision circuit 52 to determine whether a low-speed signal is received, which circuit is DC coupled to the monitor circuit 54. The output 56 of the monitor circuit that conventionally delivers the optical power signal OPS is not designed for a bandwidth up to the order of 10 MHz. According to the invention the bandwidth of this output can be enlarged, so that received low-speed signals can be determined by means of the optical power signal OPS.

It is also possible to provide the monitor circuit 54 with an additional output 58 having the required bandwidth to determine low-speed signals. In both cases, the signal determination is based on establishing whether laser radiation is received or not, i.e. radiation is "on" or "of".

The high-speed amplifier stage comprises a pre-amplifier 60 and a limiting amplifier 61, which are AC coupled via capacitor C₃. The amplifier stage is designed such that it can be switched on and off by means of a power switch signal (enabling signal) PSS from an output 62 of the decision circuit 52. The amplifier stage is active only in the high-speed mode, i.e. when high-speed signals are received. In the low-speed mode, i.e. when low-speed signals are received, amplifier stage 60 is non-active and the decision circuit 52 delivers a low-speed signal DS₁ at its output 64. Although not preferred, it is also possible to switch the amplifier stage to a low-power mode to obtain low-speed signals.

This portion of the invention is based on the insight that, although the first output 56 or the additional output 58 is DC coupled with the decision circuit, a reliable determination of radiation "on" or "of" is possible, because the required bandwidth is still low compared with that of the high-speed path (via the amplifier circuit 60). The low bandwidth in combination with the power levels received by the radiation-sensitive detector, e.g. the photo diode ensures a reliable radiation on-or-off detection even with a practically preferred design having a DC coupled decision circuit.

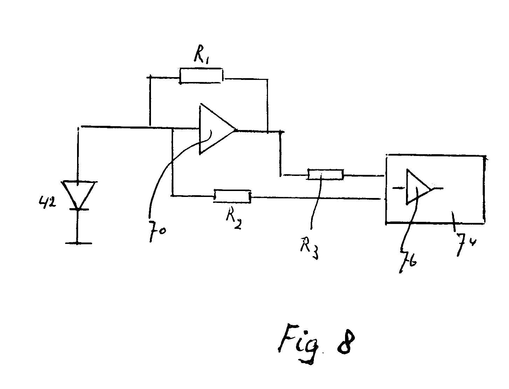

Fig. 8 shows diagrammatically an embodiment of such a design. In this embodiment, the amplifier stage comprises a TIA (Trans-Impedance Amplifier) 70 with a feedback resistor R₁ and an AC coupled (capacitor C₄) limiting amplifier 72. The power for the high-speed TIA can be switched off in the low-speed mode. The TIA input may be resistively coupled by means of a resistor R₂ to a low speed circuit 74 having a low-speed amplifier 76. R₂ has a resistance value that is substantially larger than that of the feedback resistor R₁, in order to avoid noise addition. Depending on the behavior of the TIA when not powered, another option is resistively coupling the output of the TIA to the low-speed amplifier by means of resistor R₃. The resistance value of R₃ should be sufficiently large to avoid affecting the RF path. A further option is continuously powering the TIA 70, but not to the limiting amplifier 76. Usually the limiting amplifier is arranged in the high-speed data path, directly at the output of the amplifier 60, as shown in Fig. 7. In Fig. 8, the limiting amplifier 76 is arranged in the low-speed output path.

An electronic circuit that is suitable for use in the optical receiver according to the invention should satisfy the following conditions. It should allow measurement of a large range of photo diode currents. By measuring the photo diode current, a useful low-speed data signal should be obtained. At the same time, the photo diode bias should not be reduced significantly.

Fig. 9 shows an embodiment of such an electronic circuit. This circuit comprises the photo diode PD, which receives radiation from the optical fiber 8. The photo diode is connected to the voltage supply V_{dd} via a resistor R₄, which is used for measuring the average photo diode current. The received-optical-power signal OPS is proportional to the voltage over this resistor. This voltage signal provides information about the fiber link performance. The circuit further comprises a low pass filter in the form of a capacitor C₅. Between the resistor R₄ and the photodiode PD a diode D and in parallel with this diode a second resistor R₅ is arranged. The circuit further comprises a capacitor C₄, the high-speed amplifier 80 with a feedback resistor R₆ and a comparing amplifier 90. The resistor R₅ has such a resistance value that for the expected lowest value of the current through the photo diode PD the voltage over this resistor is equal to the threshold voltage Vₜₕof the diode D so that this diode is open. On the other hand, the diode D limits the voltage drop to the photo diode so that the photo diode bias does not change significantly with variation of the current through the photo diode. The capacitance value of C₄ is chosen such that a low-speed signal can be determined by measuring the voltage over resistor R₅. A requirement is that the off-voltage, at which the high-speed amplifier is not active, is smaller than the threshold voltage Vₜₕ of the diode and the output of amplifier 90 is low. The Voltage over resistor R5 is supplied to the input of a low-speed / low power comparing amplifier 90, which compares this voltage with the voltage Vₜₕ and delivers the low-speed signal DS₁. This signal consists of radiation-on pulses alternating with time intervals wherein the radiation is off. The capacitance value of C₄ is also large enough to prevent voltage variations at C₄ from being coupled into the input of amplifier 80 via the parasitic capacitance of the photodiode PD. The large difference in speed between the high-speed and low-speed signal makes this possible. With respect to voltages V₁ and V₂ shown in Fig. 9 can be remarked that for V₁ - V₂ Vₜₕ the low-speed output is high and for V₁ - V₂ Vₜₕ the low-speed output is low. A continuous high state means that the high-speed mode is active and then the signal path through TIA 80 is activated to receive the high-speed signal.

Alternative embodiments of the receiver according of the invention use for measurement of the current through the photo diode either ground reference output or differentials output.

For clearness sake, the following table shows the main differences between a conventional fiber optical link and the mixed high/low speed link according to the invention, wherein Tx and Rx means transmitter and receiver, respectively

| | Conventional link | Mixed high/low speed link |
|---|---|---|
| Tx amplifier power | Continuously on | Off for low speed; or Low power if amplifier is also used for low-speed |
| Tx amplifier input coupling | AC | AC; or DC if amplifier is also used for low-speed |
| Tx Bias enable | High or low | high or low; or low-speed capability, DC coupled |
| Tx bias enable bandwidth | Very small | Some 10 MHz; or low-speed input |
| Tx low-speed input | None | Optional DC coupled to bias circuit |
| Rx amplifier power | Continuously on | off for low-speed; or low-power for low-speed |
| Rx amplifier coupling | AC | AC; or DC if amplifier is also used for low-speed |
| PD current | Used to monitor Rx power | used to monitor presence of power; or Rx power; or Detection of low-speed signal |
| PD current output bandwidth | Very low | Some 10 MHz; or low-speed additional DC coupled output |

The invention can be used in combination with several types of signal multiplexing. A first type is time division multiplexing (TDM) wherein at least two signals of different modes, high-speed and low-speed, are transported in different and alternating time intervals. Both the high-speed signal and the low-speed signal propagate along the same signal line, for example the core of an optical fiber of the single mode type. For example, in case both high-speed and low-speed signals are presented to the transmitter, a low-speed signal may be packed into one or more small packets and such a packet is transported in a time interval between longer high-speed signal packets. The data modulation rate of low-speed signal packet is similar to that of the high-speed signal packets. At the receiver side, the low-speed signal packet is unpacked from the high-speed data for further processing. During time intervals where only low-speed data is presented to the transmitter the transmitter is switched to the low-speed mode and the low speed signal is packed into one or more packets that are transmitted at a low data modulation rate compatible with the low-speed mode.

A second type of multiplexing with which the invention may be implemented is wavelength division multiplexing (WDM). In a WDM system, a high-speed signal and a low-speed signal propagate along the same signal line, as in the TDM system. However, the signal carriers, i.e. the laser beam, for the high-speed signal and for the low-speed signal, respectively, have different wavelengths. In such a WDM system according to the invention the high-speed laser driver electronics and the high-speed receiver electronics will be powered down or off during the low-speed operation mode.

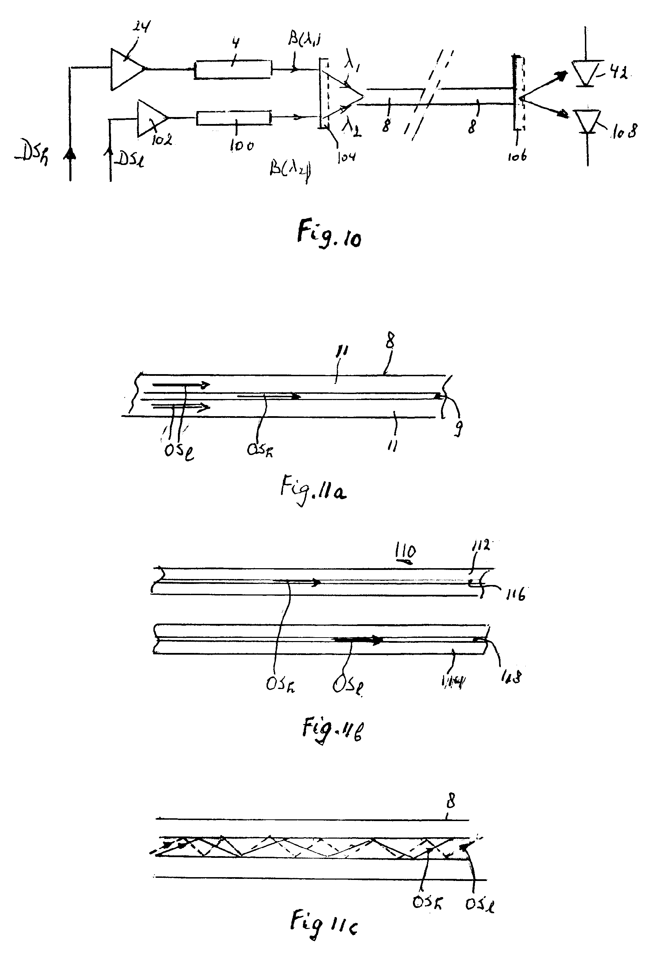

Fig. 10 shows a diagram of a WDM link. The transmitter of this link comprises a diode laser 4 emitting radiation of wavelength ₁ and the associated driver or amplifier 24 for modulating the laser with the high-speed signal and a second diode laser 100 emitting radiation of wavelength 2 for carrying the low-speed signal an its associated low-speed / low-power driver 102. The transmitter further comprises a wavelength-selective beam combining element 104, for example a diffraction grating, to couple the radiation beams B( 1) and B( 2) in the same optical fiber 8. At the receiver side, the link comprises a wavelength-selective beam-separating element 106, for example a diffraction grating, to separate the beams of different wavelengths coming from the fiber and to direct these to a first, high-speed photo diode 42, and a second, low-speed photo diode 108, respectively.

Since in the high-speed mode the transmitter and receiver consume substantially more power than in the low speed mode, according to the invention the high-speed mode is switched off when it is not needed, i.e. during low-speed operation.

The wavelength separating optics should be accurate and reliable so that cross talk from the high-speed signal to the low-speed signal is sufficiently low. In view of this, it may be preferred to use the combination of wavelength division multiplexing with time division multiplexing. The low-speed signal may be time-multiplexed with the high-speed signal and be carried by the high-speed channel when both low- and high-speed signals need to be transmitted. TDM is then used as an additional means to separate the two types of signals in a WDM system.

In practice, the low-speed part of the fiber optical link may be bi-directional, i.e. a low-speed signal is transported from the transmitter to the receiver and a similar low-speed signal is transported from the receiver to the transmitter. Then the receiver should also comprise a radiation source for transmitting a low-speed signal.

Since the low-speed part of the link requires only low power, the second radiation source 102 in the transmitter and the radiation source in the receiver may be a LED. Such an LED can be used alternately as a radiation emitter and a radiation receiver. If circumstances require so, also the high-speed part of the link may be bi-directional.

A third type of multiplexing system wherein the invention may be implemented uses spatial separation and is called spatial division multiplexing (SDM) system in this description. During transport from the transmitter to the receiver the high-speed signal and the low speed signal are now spatially separated. SDM can be realized in several ways, as is shown in Figs 11 a-c. For example, the high-speed signal may propagate through the core of a fiber and the low-speed signal through the cladding or the outer jacket of the same fiber. This is illustrated in Fig. 11a, wherein 8 is an optical fiber having a core 9 and a cladding 11 and OSₕ and OS₁ are the high-speed (optical) signal and the low-speed (optical) signal respectively. It is also possible that the high-speed signal and the low-speed signal propagate in a first fiber and in a second fiber respectively, for example in the cores of these fibers. This is illustrated in Fig. 11b, which shows a fiber assembly 110 comprising a first fiber 112 having a core 116 for transporting a high-speed optical signal OSₕ and a second fiber 114 having a core 118 for transporting a low-speed optical signal OS₁. Another option is to use radiation of different fiber modes for the high-speed signal and the low-speed signal, respectively. As is known in the art, radiation's from different fiber modes propagate along different paths in a fiber. This is illustrated in self-explaining Fig. 11c. In a fiber optical link including the fiber of Fig. 11c the transmitter should comprise two diode lasers and the receiver should comprise two photo diodes. Furthermore beam combining means and beam separating means, for example diffraction gratings should be arranged at the front and the rear side, respectively of the fiber to combine and separate, respectively the two beams of radiation.

For the low-speed signal a detector, e.g. photodiode, having a larger radiation-sensitive area may be used. The response time of such a photodiode is larger than that of a small photodiode, but sufficient small for a low-speed signal. A photodiode with a larger radiation-sensitive area allows receiving of signal radiation having a larger modal dispersion so that a broader wave-guide, such as the jacket of a fiber may be used. Moreover, the alignment requirement for such a photo-diode is less severe.

In an SDM optical link according to the invention, again the high-speed laser driver and high-speed receiver electronics will be powered down or off during the low-speed operation mode so that power consumption can be substantially reduced.

The optics for coupling the high-speed and low-speed optical signals in and out the associated fiber portions should be accurate and reliable so that cross talk from the high-speed signal to the low-speed signal is sufficiently low. In view of this, it may be preferred to use a combination of SDM and TDM. The low-speed signal may be time-multiplexed with the high-speed signal and be carried by the high-speed channel. TDM is then used as an additional means to separate the two types of signals in a SDM system.

A fourth type of multiplexing system wherein the invention may be implemented uses code division multiplexing (CDM). Conventionally CDM is used for tone signals. The laser bias circuit that is used in a TDM link during the low-speed operation mode to modulate the laser, for example on/off modulation, can be used in a CDM link to modulate the laser with a specific code that allows easy separation of high-speed and low-speed signals at the receiver side. In the receiver separate high-speed and low-speed decision circuits may be included. According to the invention the high-speed circuits are powered only when high-speed data have to be transported. The low-speed circuits may be powered continuously. The distinction between a high-speed signal and a low-speed signal may be based on a frequency spectral signature, or pattern. In the simplest embodiment this signature may be the bandwidth of the specific signal. The low-speed signal shows the lowest frequencies and the high-speed data are encoded such that no significant spectral components of the high-speed signal appear within the spectrum of the low-speed signal. Encoding may be performed by an ASIC or alternatively a FPGA (field programmable gate array).

Irrespective of the presence of a high-speed signal, and thus irrespective of the power status of the high-speed link, the low-speed link is able to transmit and receive data and thus to maintain the connection between the transmitter and the receiver.

An important and inventive aspect of the present invention relates to the handling of the data content of the signals. Since different control modes are used for the high-speed signal and the low-speed signal, respectively, the data content of these signals can be processed in a new and inventive way and the transmission of these signals can be made independent of manufacturer-specific standards, i.e. encoding protocols, used by several manufacturers of consumer apparatuses.

The present invention allows simply over-sampling the data content of the low-speed signal, instead of analyzing this. Thus, a low-speed channel can be realized for transporting a signal having, within certain limits, an arbitrary data rate and arbitrary data content. This is the case particularly for transmission links wherein the low-speed data rate is so low that after over-sampling the total data rate is still within the range for which the low-power transmission mode can be used. The data rates of widely used I²C signals for data displays or CEC (consumer electronics control) remote control signals satisfy this condition. Thus, in many applications the invention allows use of a low-speed low-power mode that operates independently of the data content of the supplied signal. This means that the low-speed channel shows a simple design and that this design is widely applicable.

As noted herein above, the high-speed mode of the new fiber optical link can be used to transport for example HDMI signals. Such a signal may also be transported in its own format, i.e. HDMI format, by simply directly sampling or even over-sampling it so that this signal needs no decoding. True, whilst a decoded HDMI signal contains only eight bit of information, for an encoded signal ten bits are needed so that for avoiding decoding the speed capability of the link should be at least about 25% larger. However, for a fiber optical link this poses no problem. Thus also for the transmission of high-speed signals such as HDMI signals or signals having similar data rates, such as DVI signals, use can be made of a general-design link that needs not to be adapted to a manufacturer-specific standard. In this way, an inventive use is made of the insight that for transmission of signals it is not necessary to understand or analyze these and decoding is not needed.

Herein above, the implementation of the invention in a dual mode link, having one channel has been described. The invention can also be implemented in a link assembly having more channels, for example a one-directional high-speed channel and a bi-directional low-speed channel. By way of example a low-speed data channel wherein over-sampling of data is performed will be described. This link is a consumer electronics control (CEC) or, more generally, an I²C link to be arranged between a high-speed signal source, for example a video source, and a remote display. Such a link is of the type two or more bits link, comprises two channels, and is suitable for transport of data and clock signals. The link forms part of a system that employs a processor such as a field-programmable-gate-array (FPGA) or an application-specific- integrated circuit (ASIC), which processor performs several functions. The link is asynchronous with any of the other processes run by the FPGA. The link channels should have a transmission capability up to 100 Kbytes per second or a bandwidth up to at least 100 kHz, preferably up to 500 kHz, which is obtained with a 1 Mega- samples/second oversampling rate. According to the invention, the link can be operated in two modes: low-speed / low-power and high-speed / high power, respectively. In the high-power mode the forward channel of the link assembly, i.e. the channel from the transmitter to the receiver, transports data at a high bit rate, for example video information, and the CEC or I²C data is included in the high bit rate stream. In the low-power mode the forward channel does not transport video information and for transmitting I²C data the laser, for example a VCSEL, of the transmitter is switched on and off.

The link assembly shows the following special provisions:
- the transmitter has a control input to switch off the high-speed mode;
- the transmitter has a control input to switch the laser power on and off when the link is in the low-power / low-speed mode and the data rate is within 1Mb/s, whereby the modulation format is not DC balanced;
- the laser bias circuit performs the low-speed modulation and the laser driver performs the high speed modulation;
- the result of high-speed clock detection is used to enable the high-speed laser driver;
- in the receiver, the output indicating the amount of radiation received by the photo detector has a bandwidth up to 1 Mb/s, whereby the detection threshold is at the one hand sufficiently high to avoid false detection and at the other hand sufficient low to ensure reliable detection of radiation.

The return channel is a low-speed channel. In case also high-speed data should be returned, the return channel of the, for example I²C link may have a configuration similar to that of the forward channel described herein above.

The data channel and the clock channel can be sampled at an arbitrary sampling rate that is at least twice the rate of the data signal and the rate of the clock signal, respectively propagating along the respective channel. At the receiver side the data pattern and the clock pattern can be reconstructed without the need for synchronization or framing of the data and the clock. It should be noted that when the I²C bus, or -channel is passive, also the link is passive, i.e. consumes minimum power.

This sampling can be used generally to transport information along any pair of signal lines, for example a data line and a clock line of an I²C bus and can be implemented independent of the type of bus, the type of data and, to a certain degree, the data rate. If a link comprising a high-speed channel and an I²C bus is in the high-speed mode for transporting, for example video data, plain sampling of the two data signals may be used to obtain a low-speed data signal for the CEC line of an I²C bus, or channel. Of course, in the high-speed mode the low-speed data have to be framed with the video data.

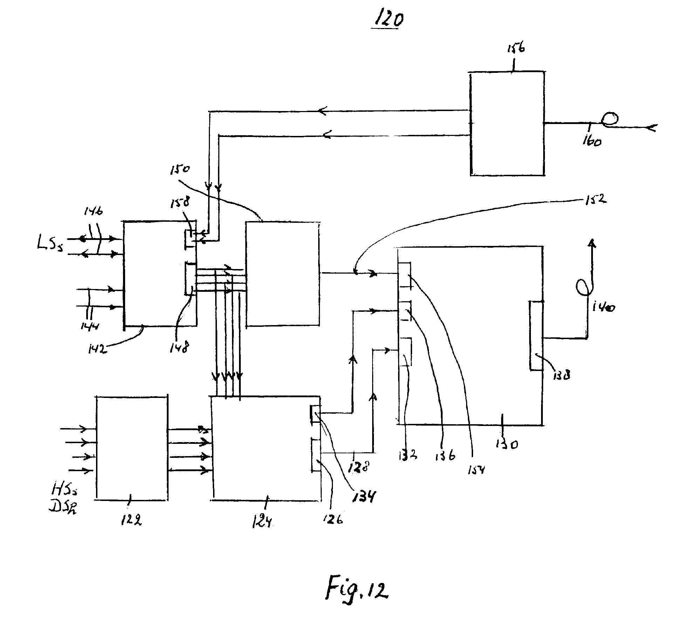

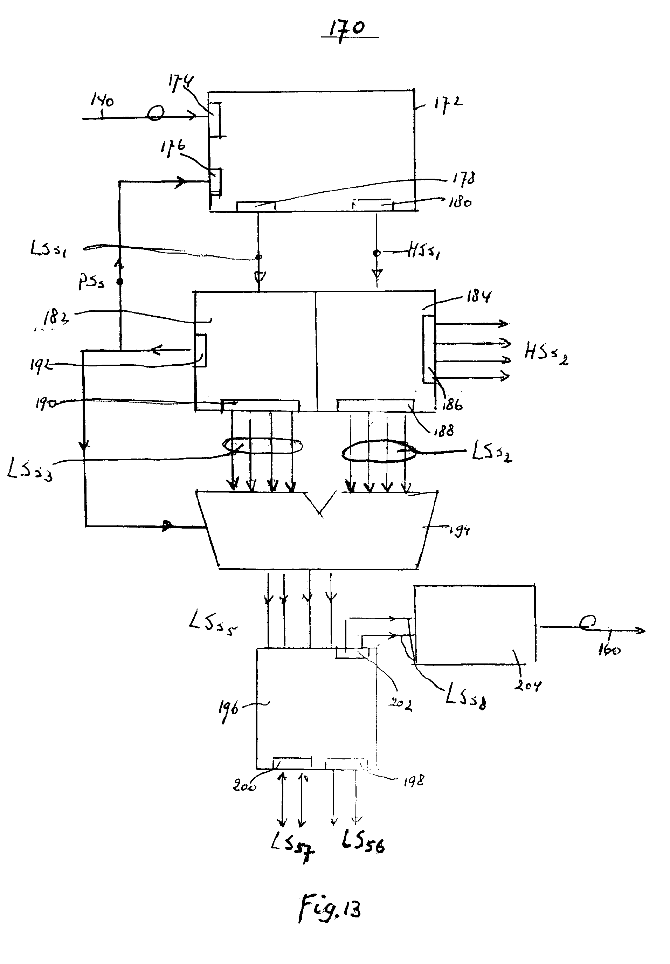

When switching from a low-speed mode to a high-speed mode, two options with respect to data content are possible:
- accept some data loss during the transition and take no measures to correct for loss of data, because the loss is small and acceptable;
- store the sampled data in a memory when the transition is initiated and use the link acknowledgement at the receiver side, via a return line, to read out the stored sampled data via the high-speed link at a rate that is slightly elevated with respect to the sample rate, to empty the memory. The scheme for the latter option can be derived from the diagrams of Figs. 12 and 13.
In principle for the transition from a high-speed mode to a low-speed mode, similar possibilities could be used. However the transition to a low-speed mode does not require frame locking and consequently this transition is generally fast, data loss is minimum and intermediate store of data not necessary.

The diagrams of Figs 12 and 13 show more details of the signal processing in an embodiment of a fiber optical link wherein the invention is implemented. This link is provided with one-directional and bi-directional signal lines. Fig. 12 shows the transmitter side and Fig. 13 shows the receiver side of this link, which comprises two optical fibers. As shown in Fig. 12, the link comprises at the transmitter side a signal receiving and processing circuit 122 for receiving and processing at least one high-speed signal HSs (=DSₕ) from a signal source (not shown). The circuit 122 may be configured to over-sample the high-speed signal, but usually it is configured to perform a synchronizing process. The signals from the circuit 122 are supplied to a circuit 124 wherein high-speed data frames are built, which are supplied, via output 126 and serial high-speed data line 128 to the high-speed input of transmitter 130. Output 126 is suitable for handling signals having a frequency band larger than 2 GB/s. In circuit 124 a power mode signal PMS is generated that is supplied via output 134 to an input 136 of the transmitter and used to set the power mode of the transmitter 130. The transmitter assembly 120 further comprises a signal receiving and processing circuit 142 for low-speed signals LSs. These signals are supplied via unidirectional signal lines 144 and bi-directional signal lines 146. The circuit 142 over-samples all low-speed input signals and the over-sampled signals from output 148 are supplied to a circuit 150. In this circuit short frame bands are built, which are supplied via a serial low-speed data line 152 to a low-speed signal input 154 of the transmitter 130. The output signals of circuit 150 have a frequency band lower than 10 MB/s. The low-speed output signals of receiving and processing circuit 142 are also supplied to the circuit 124 to frame these signals into the high-speed signals. The transmitter converts the electrical high-speed and low-speed signals into corresponding optical signals, which are supplied via output 138 to fiber 140 for transmission to the receiver side. A second fiber 160 is connected to a low-speed receiver circuit 156 of the transmitter assembly 120 for providing return signals from the receiver assembly to control the transmitter assembly. The signals from circuit 156 are supplied to input 158 of the low-speed signal receiving and processing circuit 142.

As shown in Fig. 13, the receiver assembly 170 comprises a receiver circuit 172, which can be switched between a high-power mode and a low-power mode for receiving high-speed optical signals and low-speed optical signals, respectively from fiber 140. The receiver 172 comprises optical signal input 174, a power mode input 176 a first output 178 for delivering a low-speed electrical signal LSs₁ and a second output for delivering a high-speed electrical signal HSs₁. The latter signal is supplied to a circuit 184 that unpacks the frames of this signal and delivers, at a first output 186, high-speed signals HSs₂, which are A/O suitable to drive the apparatus, for example a LCD, comprising the receiver assembly. The circuit 184 may deliver also low-speed signals LSs₂ at a second output 188. The low-speed signal LSs₁ from the receiver 172 is supplied to a circuit 182 that unpacks signal frames and delivers low-speed signals LSs₃ at its output 190. Circuit 182 also determines whether the link is in the high-speed mode. If this is the case, circuit 182 delivers at its output 192 a (high) power mode signal PSs that is supplied to the power mode input 176 of the receiver 172 to put the receiver in the high-power mode. The low-speed signals LSs₂ and LSs₃ are supplied to a multiplexer circuit 194. The multiplexer is used to select signals from output 190 or 188, when the system is in low- and high-speed mode respectively. The signal from the output 192 of circuit 182 may be supplied to the multiplexer circuit 194 and used for selecting. The low speed output signals LSs₅ of circuit 194 are supplied to circuit 196 that manages (bi-) directional low-speed signals. Circuit 196 has a first unidirectional output 198 for delivering low-speed signals LSs₆ to the apparatus comprising the receiver assembly 170. The circuit is also provided with a bi-directional output 200 for both delivering low-speed signals LSs₇ to and receiving signals from the apparatus. Via a second unidirectional output 202 circuit 196 supplies low-speed signals LSs₈ to a low-speed transmitter 204. This transmitter converts a low-speed electrical signal into a low-speed optical signal that is supplied to the optical fiber 160.

High-speed channel, for example video channel, activity can be controlled by means of pixel-clock detection. When a pixel-clock is detected, the high-speed channel is enabled, or activated. As soon as the pixel-clock disappears, the high-speed channel is disabled, or deactivated and the link switches to the low-speed mode that is inherently low power. If the invention is implemented properly, most probably no further substantial reduction in power consumption of the link is possible. Consequently, there is no longer a need for a video link standby detection. Thus, the link can operate independently of different, manufacturer-specific, standards and can be generally used.

The invention may also be used in a link assembly wherein the CEC data line does not form part of an I²C bus, but is a separate line.

Since the present invention allows the practical use of a fiber optical link for mass, or consumer, applications, a new problem becomes manifest. This problem relates to simultaneous communication of devices that are connected to a link, or interface having bi-directional signal lines.

In CEC or I²C interfaces electrical signal lines, i.e. lines in an electrical cable, are used for bi-directional signal transport between apparatuses. These apparatuses may have equal priority or one of them may be configured as a master and another one as a host. In such apparatuses and interface assemblies, usually pull-up and/or pull-down electrical circuits are used. A pull-up circuit may pull up a connected signal line, i.e. increase the voltage at this line, to a supply voltage of the assembly, for example by means of a resistor in the circuit. Each one of the apparatuses communicating via the signal line has an internal switch, for example a transistor that can pull down the signal line, i.e. decrease the voltage at this line. Moreover, each one of the apparatuses is capable to monitor the signal line and thus to determine whether the line is in a high state, which means that its voltage is above a threshold voltage, or the line is in a low state, which means that the voltage is below the threshold voltage. If one or more of the switches of the connected apparatuses is (are) activated the voltage is low and the relevant side of the link is in the low state, otherwise the voltage is high and the side is in the high state. It will be clear that such an interface assembly allows at each moment only one of the apparatuses to communicate to other apparatuses, otherwise signals from two apparatuses will collide and a system hang-up will occur. In an electrical link, or interface, this problem can be solved by using an arbitrating master device that controls admittance to the signal line. Usually this function is assigned to one of the communicating apparatuses. It is also possible to use a clock signal controlled by a similar pull-up electrical circuitry that is embedded in an IC. Usually a master device provides such a clock signal. It is also possible to ignore the problem and allow collision, because a data signal can be re-send at a later moment if it meets an occupied signal line.

Because of the nature of an optical link for interconnecting electrical apparatuses, these solutions can not be used for such a link. If an electrical line at one side, the A-side, of the bi-directional optical link is set in the low state, the optical link will set the electrical line at the other side, the B-side, in the low state. The optical link will determine that the B-side is in the low state and in turn will set the electrical line at the A-side low, thereby latching the link assembly in the low state so that communication is no longer possible. Thus, the optical link cannot simply communicate the A-side state to the B-side by setting the electrical line at the B-side in the low state and vice versa. Such action will result in an interruption of the optical link and the A-side and B-side will be separated from each other and no longer be interconnected in such a way that communication is possible.

The invention provides a solution for this problem. An optical link having a first side for connection with a first electrical apparatus and a second side for connection with a second apparatus is, according to the invention, characterized in that at least one of the sides is provided with an operating-state determining and controlling device for controlling the side state reported to the other side.

The operating-state determining and controlling device is understood to mean an electronic device that determines whether a signal for controlling the operating state (active or inactive) of the relevant link side is supplied by an apparatus at this side or is received from the other link side via the optical link. This device also decides which state signal is to be sent to the other link side to prevent latching, or blocking, of the optical link.

If at a certain moment the electrical line at the B-side is set in the low state, this may be the result of an optical signal received from the A-side or of an electrical signal delivered by the B-side apparatus. The state-determining device at the B-side determines whether it is the optical line that has set the electrical line in the low state. If this is the case, the state-determining device communicates to the A-side that the B-side is in the high state. In this way, it is prevented that the A-side is set in the low state in response to the low state of side B. When the apparatus at side A releases the line, i.e. sets the line to the high state, the transition from low to high state can be detected. This transition at the A-side is reported to the B-side via the optical line, which results in a release of the line at side B. Then, the electrical line at side B is set into the high state, unless an apparatus at the B-side is simultaneously setting the electrical line in the low state. In the latter case a collision, i.e. a conflict between the two apparatuses, would occur, because both are or have been trying to set the line in the low state at nearly the same time, without a time margin between the high/low transition. In the said latter case, side A was low and just tries to go high, whilst side B apparently was also low, or just became low at nearly the same time that A went high. In case the electrical line at the B-side is in the low state at the moment this side receives via the optical line a high state signal from the A-side, the state-determining device at the B-side will report to the A-side that the B-side is in the low state. Then, the A-side will set its electrical line in the low state.

The same process of setting line states and transfer of state transitions is performed by the optical link in the reversed direction, i.e. when starting from the state at the A-side. In this way, the optical link is made suitable for bi-directional communication, or in other words, the link is made transparent. This means that the optical link does not significantly affect or alter the signal transfer through the link.

It is noted that there is a small delay between the moment at which the level of an electrical signal at the A-side (or B-side) is determined and the moment of reception and processing of the corresponding optical signal at the B-side (or A-side). Thus in an optical link having a state-determining device a low state can be reported to one side of the link with a small delay after the opposite side of the link has undergone an electrical signal transition to a high state generated by an apparatus at the latter side.

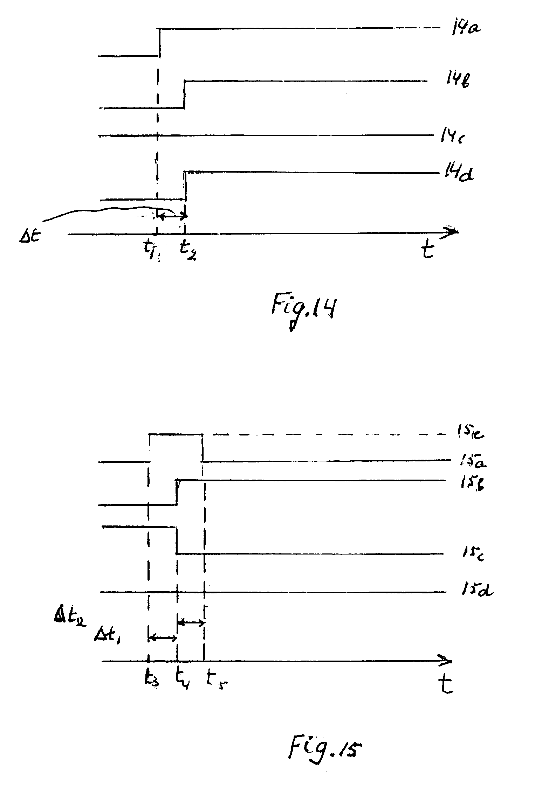

This is illustrated in Figs. 14 and 15, which show transfer schemes of state- transitions for different electrical states at the B-side, respectively. Fig. 14 shows the situation that the B-side is set in the high state. As shown in graph 14a, which represents the electrical state at side A, at moment t₁ the electrical state at the A-side goes from low to high. This state transition is received and processed at the B-side after a delay t, thus at moment t₂, as shown in graph 14b, which represents the state optically received at side B. The delay is mainly caused by the propagation time of the laser radiation through the fiber. At moment t₂ the B-side is in the high state, as shown in graph 14d, which represents the electrical state at side B. The state that will be reported to the A-side is the high state, as shown in Fig. 14c, which represents the optically transmitted state from side B to side A. Note that the electrical high-state is the electrically inactive state, in this state the switches are off and the pull-up resistors passively pull the line high.

Fig. 15 represents the situation that the apparatus at the B-side is set in the low state, such that it continually signals a low electrical state on the B-side by pulling the line low as shown in graph 15d. During the same time, the electrical state on side A is low and side A is reporting a low electrical state to side B through the optical link, as shown in graph (15b). Because side B is receiving a low state through it's optical link it cannot report back to side A that it is measuring a low state too. Instead side B pulls it's electrical state low, irrespective of external apparatuses that may also be pulling it low. At point t₃ in time the electrical state on side A becomes high, i.e. an apparatus at side A releases the line. This transition is received at side B at moment t₄. Then side B can detect its own low electrical state at its side and will report this state to side A (graph 15c). Finally, side A receives the low state from side B at moment t₅ and goes back to a low electrical state (graph 15d). This goes with a delay of twice the optical link delay, thus 2. t after the optical line has been released, i.e. after the A-side is set in the high electrical state.

At moment t₃, the apparatus at the A-side releases the optical line so that the electrical line is set in the high state, as shown in graph 15a. This low-high transition is optically transferred to the B-side and received and processed there at moment t₄, thus with a first delay t₁, as shown in graph 15b. The electrical line at the B-side would now go to the high state if an apparatus at side B would not be holding it low. However, since there is an apparatus pulling the line at side B low, it is reported back to the A-side that the B-side is in the low state, as shown in graph 15 c. This state is received and processed by the A-side after a further delay t₂, thus at moment t₅. At this moment the A-side is set in the low state. The B-side is still in the low state, because the external apparatus holds it low, as shown in graph 15d. The dashed line of graph 15e shows the state of the apparatus at the A-side. At moment t₃ the apparatus at the A-side becomes inactive (i.e. no longer pulls the line low, i.e. releases the line). At moment t₅ the optical link pulls the line low, defining a low electrical state at side A.

In this way, a bi-directional communication has become possible with a practical limitation in the transfer rate, because of the delay in the optical line. The system is stable, i.e. it cannot enter a self-oscillating state.

In the embodiment described above at both sides of the bi-directional optical link a state-determining device is arranged to determine which type of signal should be transmitted at this side. If it is reported to a first side that the second side is in the active state (electrical low state in the embodiment), the first side will not report back an active state signal to the second side as long as the second side transmits the active signal. It is also possible to provide only one side, for example the A-side, of the bi-directional optical link with a state-determining device. In that case, the state-determining device is configured such that the A-side will ignore an active-state signal from the B-side during a total time period that includes the period that the A-side itself transmits an active-state signal and a succeeding period needed for the B-side to detect that the A-side no longer transmits the active-state signal and for side B to report this back to the A-side. The said succeeding period should be at least twice the delay (propagation time through the fiber) to prevent that the link assembly becomes unstable.

That the inventive state reporting method by means of a state-determining device at one or two ends of the optical link solves a problem that becomes manifest after a fiber optical link that is suitable for practice has become available, does not mean that the use of this method is limited to a fiber link. This method can be use in any optical link.

## Claims

1. A fiber optical link for transmitting digital data from a first device to a second device, which link comprises an optical transmitter coupled to the first device and an optical receiver coupled to the second device and at least one optical fiber arranged between the transmitter and the receiver, **characterized in that** the transmitter and the receiver are designed to operate in a first, high-power/ high-speed, mode and in a second, low-power/ low-speed mode for transmitting and receiving high-speed data signals and low-speed data signals, respectively.

2. An optical transmitter for use in the fiber optical link of claim 1 and comprising a diode laser, a laser bias circuit, a laser driver, a power input and a data signal input, **characterized by** a power-mode-input for receiving a power-mode signal that controls the power supplied to the laser driver.

3. An optical transmitter for use in the fiber optical link of claim 1 and comprising a diode laser, a laser bias circuit, a laser driver, a power input and a data signal input, **characterized by** a circuit that recognizes the data rate of the date signal and sets the transmitter in said first mode or in said second mode in dependency of the data rate.

4. An optical transmitter as claimed in claim 2 and wherein the bias circuit comprises an enabling input, **characterized in that** the enabling input is designed to accept a low-speed signal for switching the bias circuit according to the low-speed signal.

5. An optical transmitter as claimed in claim 2 and wherein the bias circuit comprises an enabling input, **characterized in that** the bias circuit comprises a separate input for receiving a low-speed signal for switching the bias circuit according to the low-speed signal.

6. An optical transmitter as claimed in claim 2, **characterized in that** the laser driver is designed to accept a low-speed signal when the transmitter is in a low-power mode and the bias circuit is inactive.

7. An optical receiver for use in the optical link of claim 1 and comprising a photo diode for converting an optical signal into an electrical signal, an amplifier circuit for amplifying the electrical signal, a power supply for the amplifier and a monitoring circuit for monitoring the photo diode current, **characterized by** a decision circuit for controlling the power supply in dependency of the data rate of the received optical signal and for delivering low-speed electrical signals, an input of the decision circuit being connected to an output of the monitoring circuit.

8. An optical receiver as claimed in claim 7, wherein the monitoring circuit is provided with an output for delivering a monitor signal that is representative of the received optical power, **characterized in that** this output is designed to handle signals having a bandwidth of the order of 10 MHz and is coupled to the input of the decision circuit.

9. An optical receiver as claimed in claim 7, wherein the monitoring circuit is provided with an output for delivering a monitor signal that is representative of the received optical power, **characterized in that** the monitoring circuit is provided with an additional output designed to handle signals of the order of 10 MHz and that this output is connected to the input of the decision circuit.

10. A fiber optical link as claimed in claim 1, **characterized in that** it is configured for multiplexing the high-speed signal (DSₕ) and the low-speed signal (DS₁) according to one of the single types of: time division, wavelength division and spatial division multiplexing and of the combination types of: time division with one of the two other single types.

11. A fiber optical link as claimed in claim 1, **characterized in that** it is configured for code division multiplexing of at least one of signals of the type low-speed signal and tone signal.

12. A fiber optical link as claimed in claim 11, **characterized in that** it is also configured for time division multiplexing the high-speed signal and the low-speed signal.

13. A fiber optical link as claimed in any one of claims 1 and 10-12, **characterized in that** it is configured to over-sample at least one low-speed signal without analyzing this signal.

14. A fiber optical link as claimed in any one of claims 1 and 10-13, **characterized in that** it is configured to over-sample the high-speed signal without decoding this signal.

15. A fiber optical link assembly as claimed in any one of claims 1 and 10-14, **characterized in that** it is constituted by a single channel.

16. A fiber optical link assembly as claimed in any one of claims 1 and 10-14, **characterized in that** it comprises a low-speed bi-directional channel and a high-speed channel of the type one-directional or bi-directional.

17. A fiber optical link assembly as claimed in claim 16, **characterized in that** bi-directional channel lines are suitable for use with pull-up (I²C), pull-down or tri-state methods.

18. An optical link having a first side for connection with a first electrical apparatus and a second side for connection with a second apparatus and signal lines for transferring signals at least one of the lines being bi-directional, **characterized in that** at least one of the sides is provided with an operating-state determining and controlling device for controlling the side state reported to the other side.

## Amended claims

### Amended claims under Art. 19.1 PCT

1. A fiber optical link for transmitting digital data from a first device to a second device, which link comprises an optical transmitter coupled to the first device and an optical receiver coupled to the second device and at least one optical fiber arranged between the transmitter and the receiver, **characterized in that** the transmitter (20) and the receiver (50) are designed to operate in a first, high-power/ high-speed, mode and in a second, low-power/ low-speed mode for transmitting and receiving high-speed data signals (DSₕ) and low-speed data signals (DS₁), respectively.

2. An optical transmitter (20) for use in the fiber optical link of claim 1 and comprising a diode laser (4), a laser bias circuit (22), a laser driver (24), a power input (21) and a data signal input (23), **characterized by** a power-mode-input (25) for receiving a power-mode signal (PMS) that controls the power supplied to the laser driver.

3. An optical transmitter for use in the fiber optical link of claim 1 and comprising a diode laser (4), a laser bias circuit (22), a laser driver (24), a power input (21) and a data signal input (23), **characterized by** a circuit that recognizes the data rate of the date signal (DS) and sets the transmitter (20) in said first mode or in said second mode in dependency of the data rate.

4. An optical transmitter as claimed in claim 2 and wherein the bias circuit (22) comprises an enabling input (28), **characterized in that** the enabling input is designed to accept a low-speed signal (DS₁) for switching the bias circuit according to the low-speed signal.

5. An optical transmitter as claimed in claim 2 and wherein the bias circuit (22) comprises an enabling input (28), **characterized in that** the bias circuit comprises a separate input (32) for receiving a low-speed signal (DS₁) for switching the bias circuit according to the low-speed signal.

6. An optical transmitter as claimed in claim 2, **characterized in that** the laser driver (24) is designed to accept a low-speed signal (DS₁) when the transmitter is in a low-power mode and the bias circuit (22) is inactive.

7. An optical receiver for use in the optical link of claim 1 and comprising a photo diode (42) for converting an optical signal into an electrical signal (Dse), an amplifier circuit (60) for amplifying the electrical signal, a power supply (46) for the amplifier and a monitoring circuit (54) for monitoring the photo diode current, **characterized by** a decision circuit (52) for controlling the power supply in dependency of the data rate of the received optical signal and for delivering low-speed electrical signals, an input of the decision circuit being connected to an output (56) of the monitoring circuit.

8. An optical receiver as claimed in claim 7, wherein the monitoring circuit (54) is provided with an output (56) for delivering a monitor signal (Ops) that is representative of the received optical power, **characterized in that** this output is designed to handle signals having a bandwidth of the order of 10 MHz and is coupled to the input of the decision circuit (52).

9. An optical receiver as claimed in claim 7, wherein the monitoring circuit (54) is provided with an output (56) for delivering a monitor signal (Ops) that is representative of the received optical power, **characterized in that** the monitoring circuit is provided with an additional output (58) designed to handle signals of the order of 10 MHz and that this output is connected to the input of the decision circuit (52).

10. A fiber optical link as claimed in claim 1, **characterized in that** it is configured for multiplexing the high-speed signal (DSₕ) and the low-speed signal (DS₁) according to one of the single types of: time division, wavelength division and spatial division multiplexing and of the combination types of: time division with one of the two other single types.

11. A fiber optical link as claimed in claim 1, **characterized in that** it is configured for code division multiplexing of at least one of signals of the type low-speed signal and tone signal.

12. A fiber optical link as claimed in claim 11, **characterized in that** it is also configured for time division multiplexing the high-speed signal and the low-speed signal.

13. A fiber optical link as claimed in any one of claims 1 and 10-12, **characterized in that** it is configured to over-sample at least one low-speed signal (DS₁) without analyzing this signal.

14. A fiber optical link as claimed in any one of claims 1 and 10-13, **characterized in that** it is configured to over-sample the high-speed signal (DSₕ) without decoding this signal.

15. A fiber optical link assembly as claimed in any one of claims 1 and 10-14, **characterized in that** it is constituted by a single channel (8).

16. A fiber optical link assembly as claimed in any one of claims 1 and 10-14, **characterized in that** it comprises a low-speed bi-directional channel and a high-speed channel of the type one-directional or bi-directional.

17. A fiber optical link assembly as claimed in claim 16, **characterized in that** bi-directional channel lines are suitable for use with pull-up (I²C), pull-down or tri-state methods.

18. An optical link having a first side for connection with a first electrical apparatus and a second side for connection with a second apparatus and signal lines for transferring signals at least one of the lines being bi-directional, **characterized in that** at least one of the sides is provided with an operating-state determining and controlling device for controlling the side state reported to the other side.
